# EUROPÄISCHE PATENTSCHRIFT

(11) **EP 3 613 378 B1**
(45) Veröffentlichungstag und Bekanntmachung des Hinweises auf die Patenterteilung: **14.07.2021**
(21) Anmeldenummer: 18205433.8
(22) Anmeldetag: 09.11.2018
(51) Int. Cl.: A61C 17/22

(54) **ZAHNPUTZVORRICHTUNG MIT INTEGRIERTER ANTRIEBSVORRICHTUNG**
TOOTH CLEANING DEVICE WITH INTEGRATED DRIVE DEVICE
DISPOSITIF DE NETTOYAGE DENTAIRE POURVU DE DISPOSITIF D'ENTRAÎNEMENT INTÉGRÉ

(30) Priorität: 25.07.2018 EP 18185450
(43) Veröffentlichungstag der Anmeldung: 26.02.2020
(73) Patentinhaber: BLBR GmbH, 82031 Grünwald (DE)
(72) Erfinder: KEINER, Michael, 35619 Braunfels (DE)
(74) Vertreter: Becker & Kurig Partnerschaft Patentanwälte PartmbB

(56) Entgegenhaltungen:
- WO-A1-2007/121760
- DE-U1- 20 120 955
- US-A1- 2013 067 665
- US-A1- 2016 270 892

## Beschreibung

### Technisches Gebiet

Die vorliegende Erfindung betrifft eine Zahnputzvorrichtung mit integrierter Antriebsvorrichtung. Insbesondere betrifft die Erfindung eine Zahnputzvorrichtung mit integrierter Antriebsvorrichtung für die freihändige, gleichzeitige Reinigung mehrerer, vorzugsweise aller Zähne eines Benutzers.

### Beschreibung des Standes der Technik

Das Putzen der Zähne ist die Basis der Individualprophylaxe zur Zahnerhaltung. Primäre Ziele sind die Entfernung bakterieller Plaques (Karies, Parodontitis) und die Entfernung von Speiseresten und Fremdkörpern. Sekundäre Ziele sind die Fluoridapplikation über Zahncremes zur Erhöhung der Widerstandskraft der Zähne, insbesondere des Zahnschmelzes gegen saure Stoffwechselprodukte der Bakterien im Mundraum.

Das verbreitetste und auch billigste Modell ist die mit der Hand geführte Kurzkopfzahnbürste. Einige Bereiche im Mund sind durch einen kleinen Bürstenkopf besser erreichbar, weshalb hochwertige Handzahnbürsten oft über einen kurzen Kopf, mittelharte bis weiche Kunststoffborsten mit abgerundeten Borstenenden und einen ergonomischen Handgriff verfügen, der eine sichere Führung erlaubt.

Eine weitere verbreitete Art der Zahnreinigung ist die Verwendung einer oszillierendrotierende Zahnbürste, die sich durch einen runden rotierenden bzw. oszillierenden Bürstenkopf auszeichnet. Das Funktionsprinzip ist einem Zahnpoliturwerkzeug ähnlich. Die Reinigungsleistung von oszillierend-rotierenden Bürstenköpfen ist nach einer Studie in einem geringen Maße besser als diejenige von Handzahnbürsten.

Als Weiterentwicklung der elektrischen Zahnbürste gilt die elektronische Schallzahnbürste. Bei dieser wird der Bürstenkopf mit einer höheren Frequenz als bei herkömmlichen elektrischen Zahnbürsten bewegt, meist mit einer Frequenz von 250 bis 300 Hertz.

Eine neuere Weiterentwicklung ist die Ultraschallzahnbürste, die Schwingungsfrequenzen oberhalb 300 Hertz nutzt. Ultraschallzahnbürsten erreichen bis zu 1,8 Mio. Schwingungen pro Sekunde (1,8 MHz). Derartige Geräte arbeiten mit einem Tupfer, der Flüssigkeit im Mund in Schwingungen versetzt und mithilfe einer speziellen Zahnpasta erzeugte Schaumblasen zum Platzen bringt. Durch dieses Zerplatzen wird die Reinigungsleistung erreicht. Ultraschallzahnpasta enthält keinen Putzkörper und arbeitet somit nicht mehr mechanisch.

Allen obigen Zahnreinigungsverfahren gleich ist, dass die eigentliche Reinigungstätigkeit der Zahnflächen manuell durch den Anwender erfolgen muss. Unabhängig davon, welche Form der Zahnreinigung gewählt wird, muss der Benutzer einen nur einige Millimeter großen Bürstenkopf in verschiedenen Techniken über die jeweilige Zahnoberfläche führen. Dabei kommen verschiedenste Hinweise zum Einsatz, wie die sinnvolle Ausführung der Putzbewegung (kreisend, streichend) zu gestalten ist. Um ein normales menschliches Gebiss sorgfältig zu reinigen, werden 2,5 bis 3 Minuten ausschließliche Reinigungstätigkeit benötigt.

Der manuelle Putzvorgang durch den Anwender ist jedoch mit gravierenden Mängeln behaftet:
- Bei einer manuellen Reinigung besteht immer die Gefahr, dass einige Zähne oder Zahnflächen vergessen werden.
- Der Anwender kann zu viel oder zu wenig Druck mit dem Bürstenkopf ausüben.
- Durch unsachgemäße Techniken können Speisereste oder Zahnbeläge in den Zwischenraum zwischen Zahnfleisch und Zahn gelangen und dort Probleme verursachen.
- Zahnbürstenköpfe werden grundsätzlich ohne besonderen Hygieneschutz aufbewahrt, so dass sie ein Reservoir für Krankheitsüberträger darstellen können.
- Die manuelle Zahnreinigung nimmt mit 2,5 bis 3 Minuten zweimal täglich zu viel Zeit in Anspruch.

Um diese Nachteile abzumindern, sollte der Vorgang der Zahnreinigung so weit wie möglich automatisiert und individuell an Form und Größe der Zähne und des Kiefers des Anwenders angepasst werden. Insbesondere ist eine schnelle, anwendungssichere und gründliche Zahnreinigungstechnik wünschenswert, was in den vergangenen Jahren zur Entwicklung von Zahnreinigungssystemen für das gesamte Gebiss eines Benutzers geführt hat.

Die Patentanmeldung DE 102015109891 A1, die von dem Erfinder der vorliegenden Anmeldung entwickelt wurde, offenbart eine solche Zahnputzvorrichtung für die gleichzeitige Reinigung mehrerer, vorzugsweise aller Zähne eines Benutzers. Hier wird ein Mundeinsatz über eine Kupplung mit einem Vibrationsmotor verbunden, der die Zahnputzvorrichtung in Vibration versetzt.

Die Zahnputzvorrichtung der DE 102015109891 A1 weist jedoch unterschiedliche Mängel auf. So wird die Rotation, die durch die Antriebsvorrichtung der DE 102015109891 A1 erzeugt wird, nur unzureichend an das Mundstück übertragen. Das Gewicht der Antriebsvorrichtung kann den Benutzer während der Verwendung der Vorrichtung zudem stören. Die Hebelwirkung der vorverlagerten Antriebsvorrichtung macht zudem eine relativ stabile Verbindung zwischen Antrieb und Mundstück notwendig, um Schäden am Verbindungsmechanismus zu verhindern. Dies erhöht wiederum das Gewicht und die Kosten der Zahnreinigungsvorrichtung der DE 102015109891 A1. Zudem sind alle mechanischen Kopplungen zwischen Antrieb und Mundstück auch Angriffspunkte für Schmutz, Bakterien sowie Verschleiß und chemische Zersetzung, da diese Teile der Vorrichtung regelmäßig mit Wasser in Berührung kommen.

Die obigen Mängel im Stand der Technik werden durch die Zahnputzvorrichtung mit integrierter Antriebsvorrichtung für die freihändige, gleichzeitige Reinigung mehrerer, vorzugsweise aller Zähne eines Benutzers gemäß der vorliegenden Erfindung behoben, wobei ein individuell an den Benutzer anpassbares, vollautomatisches Zahnreinigungsgeräts erhalten wird. Chemische, kinetische und mechanische Reinigungseigenschaften sollen sich derart ergänzen, dass ein nahezu optimales Reinigungs- und Pflegeergebnis sowohl der Zähne, als auch des Zahnfleischs erzielt wird.

WO 2007/121760 A1 offenbart eine zahnärztliche Vorrichtung, die eine oder zwei Mulden, die zum Eintauchen der Zähne und/oder des Zahnfleisches eines oder beider Zahnbögen geformt sind, wobei die Mulde mit einem oder mehreren Vorsprüngen versehen ist, die so konfiguriert sind, dass sie die Zähne und/oder das Zahnfleisch physisch stimulieren, und eine Schale umfasst, die so geformt ist, dass sie die Mulde(n) aufnimmt, wobei die Schale mit einem oder mehreren Wandlern angeordnet ist, die so konfiguriert sind, dass sie die Vorsprünge mechanisch stimulieren, und wahlweise mit Mitteln zur Bereitstellung von Licht angeordnet ist. Sie bezieht sich ferner auf die Verwendung des Trogs und die Behandlungsmethode. WO 2007/121760 offenbart eine Zahnputzvorrichtung, die alle technischen Merkmalen der Präambel von Anspruch 1 aufweist.

US 2013/067665 A1 offenbart eine Zahnputzvorrichtung zum freihändigen und gleichzeitigen Zähneputzen aller Zähne eines Benutzers, ohne dass eine manuelle Manipulation erforderlich ist, so dass der Benutzer während des Zähneputzens anderen Aktivitäten nachgehen kann. Die Vorrichtung umfasst obere und untere Bürstenschalen, die Zahnbürstenmaterial für den Kontakt mit den Zähnen des Benutzers enthalten, einen Motor, der in einem Motorgehäuse untergebracht ist, das sich in dem von den Bürstenschalen gebildeten Raum befindet, und einen Schalter zur Betätigung des Motors.

US 2016/270892 A1 offenbart einen Mundstücktyp einer elektrischen Zahnbürste. Der Mundstücktyp der elektrischen Zahnbürste umfasst einen Zahnbürstenkopf, der ein mundstückförmiges Gehäuse umfasst, das mit einer oberen und einer unteren Öffnung und einem blockierten Zwischenteil versehen ist, wobei eine Vielzahl von ersten Silikonvorsprüngen so angeordnet werden kann, dass sie in einem vorbestimmten Abstand voneinander entlang einer Innenwandfläche des Gehäuses in der oberen und unteren Öffnung angeordnet sind und einen Hauptkörper, der vom Zahnbürstenkopf abnehmbar ist und eine Vibration auf den Zahnbürstenkopf überträgt.

DE 201 20 955 U1 offenbart eine elektrische Zahnputzmaschine zur simultanen Reinigung aller Zähne des Ober- und Unterkiefers, die aufgrund der kompakten Bauform vollständig im Mundraum Platz findet.

### Zusammenfassung der Erfindung

Die vorliegende Erfindung wird durch die beigefügten Ansprüche bereitgestellt. Die nun folgende Offenbarung von bevorzugten Ausführungsformen dient dem erleichterten Verständnis der vorliegenden Erfindung. Entsprechend wird durch die vorliegende Offenbarung eine Zahnputzvorrichtung mit integrierter Antriebsvorrichtung für die freihändige, gleichzeitige Reinigung mehrerer, vorzugsweise aller Zähne eines Benutzers bereitgestellt. Die Zahnputzvorrichtung umfasst eine Trägerstruktur, umfassend einen Mundeinsatz für den Oberkiefer des Benutzers und einen Mundeinsatz für den Unterkiefer des Benutzers. Die Zahnputzvorrichtung umfasst ferner mindestens eine Antriebsvorrichtung zur Erzeugung von Schwingungen, wobei die mindestens eine Antriebsvorrichtung zumindest teilweise in einem Raum zwischen dem Mundeinsatz für den Oberkiefer und dem Mundeinsatz für den Unterkiefer angeordnet und mit diesen verbunden ist, um die Schwingungen der mindestens einen Antriebsvorrichtung an die Mundeinsätze zu übertragen. Die Zahnputzvorrichtung umfasst weiterhin eine Silikonhülle, die die Trägerstruktur und die mindestens eine Antriebsvorrichtung im Wesentlichen vollständig umgibt.

Durch die kompakte Bauweise der Zahnputzvorrichtung dieser Ausführungsform kann eine kompakte und gut austarierte Zahnputzvorrichtung erhalten werden. Die Anordnung der Antriebsvorrichtung zwischen den Mundeinsätzen ermöglicht noch nie dagewesene Designansätze. Zudem führt die kurze Distanz zur Verbindung der Antriebsvorrichtung mit den Mundeinsätzen zu einer effektiveren Schwingungsübertragung, so dass Energie und Kosten gespart werden können.

In einer Ausführungsform der Offenbarung umfasst die mindestens eine Antriebsvorrichtung einen Schwingungsmotor zur Erzeugung von Schwingungen und ein Gehäuse, wobei der Schwingungsmotor zumindest teilweise in dem Gehäuse angeordnet und mit dem Gehäuse verbunden ist, um die erzeugten Schwingungen über das Gehäuse an die Mundeinsätze zu übertragen.

Dadurch, dass in der vorliegenden Ausführungsform die Silikonhülle die Trägerstruktur und die mindestens eine Antriebsvorrichtung vollständig umgibt ("im Wesentlichen" bezieht sich auf optionale Ausnahmen, wie beispielsweise eine Montageöffnung in der Silikonhülle oder Anschlüsse für Datenübertragung und/oder Stromzufuhr), werden Probleme bezüglich der Verschmutzung oder Abnutzung des Bereichs der mechanischen Kopplung zwischen Antriebsvorrichtung und Mundstück, wie sie im Stand der Technik üblich sind, vollständig vermieden. Die Silikonhülle sorgt zudem für einen angemessenen Schutz der darin befindlichen Teile der Zahnputzvorrichtung, insbesondere der Antriebseinheit (Motor), dazu gehöriger, optionaler Steuerhardware und der Stromversorgung (z.B. durch eine Li-Ionen-Batterie oder Akkumulator).

In einer Ausführungsform der Offenbarung ist die Silikonhülle einstückig ausgebildet und weist eine Öffnung und einen Silikondeckel auf, der die Öffnung nach IP67 wasser- und staubdicht verschließt. Durch die Öffnung kann ein Austausch eventuell abgenutzter Bauteile erfolgen, beispielsweise, falls eine vorgesehene Batterie ihre Lebensdauer überschreitet. Die Öffnung erleichtert zudem die Montage der Vorrichtung, bei der die Silikonhülle üblicherweise an der Öffnung mit einer Vorrichtung auseinandergezogen und die Trägerstruktur samt Antriebsvorrichtung und optionaler weiterer Bauteile drin eingesetzt. Die Schutzklasse IP67 ist für die Anwendung als Zahnputzvorrichtung angemessen, es kann jedoch auch eine höhere Schutzklasse erreicht werden (z.B. durch zusätzliche Dichtungen).

In einer Ausführungsform der Offenbarung erzeugt der Schwingungsmotor Schwingungen durch Rotation einer Unwucht und eine Rotationsachse der Unwucht verläuft im Wesentlichen parallel zu einer Gebissebene des Benutzers, die sich im Wesentlichen parallel zu und zwischen den Mundeinsätzen erstreckt, d.h. die Rotationsachse der Unwucht im Wesentlichen parallel zu der der Sagittalachse des Körpers des Benutzers ist, der die Zahnputzvorrichtung benutzt. Die Verwendung einer rotierenden Unwucht zur Schwingungserzeugung hat sich für die Bauweise der Zahnputzvorrichtung der vorliegenden Erfindung als besonders geeignet erwiesen. Der besonders kurze Übertragungsweg vom Gehäuse der Antriebsvorrichtung zu den Mundeinsätzen sorgt für eine effektive und gleichmäßige Schwingungsübertragung. Es sei jedoch angemerkt, dass auch andere Bauformen von Schwingungsmotoren verwendet werden können, z.B. Piezomotoren oder elektromagnetische Schallwandler, ohne vom Grundgedanken der Erfindung abzuweichen.

In einer Ausführungsform der Offenbarung ist die Unwucht außerhalb des Raums zwischen den Mundeinsätzen und außerhalb des Gehäuses der mindestens einen Antriebsvorrichtung angeordnet. Die Anordnung der Unwucht außerhalb des Motorgehäuses ermöglicht eine weitere Miniaturisierung des Gehäuses, wodurch der Öffnungswinkel des Gebisses des Benutzers, der die Zahnputzvorrichtung vor der Benutzung in den Mund einführt, reduziert werden kann.

In einer Ausführungsform der Offenbarung berührt die Trägerstruktur die mindestens eine Antriebsvorrichtung direkt oder ist direkt über ein schwingungsdämpfendes Kissen mit der mindestens einen Antriebsvorrichtung verbunden. Die direkte Berührung von Trägerstruktur und Antriebsvorrichtung erfolgt bevorzugt über eine Gehäusefassung der Trägerstruktur, die das Gehäuse, zumindest teilweise, aufnimmt. Um zu starke Schwingungen oder unerwünschte Schwingungskomponenten (z.B. Drehschwingungen) zu dämpfen, kann optional ein schwingungsdämpfendes Kissen zwischen Antriebsvorrichtung und Trägerstruktur vorgesehen sein. Das schwingungsdämpfende Kissen besteht bevorzugt aus Silikon, Kunststoff oder einer Gummimischung.

In einer Ausführungsform der Offenbarung ist die mindestens eine Antriebsvorrichtung konfiguriert, um Schwingungen von 30 - 400 Hz, bevorzugt 50 - 350 Hz und besonders bevorzugt von 70 - 300 Hz zu erzeugen. Die bevorzugten Schwingungsfrequenzen haben sich für die integrale Bauweise der Zahnputzvorrichtung der vorliegenden Erfindung als besonders geeignet erwiesen. Insbesondere wird die Reinigungswirkung optimiert, ohne ein Übermaß an Energie an die Zähne des Benutzers zu übertragen, was zu starker Abnutzung oder Kopfschmerzen führen könnte. Folglich erhöhen die bevorzugten Schwingungsfrequenzen den Benutzungskomfort.

In einer Ausführungsform der Offenbarung ist die mindestens eine Antriebsvorrichtung konfiguriert, um Schwingungen entlang der Längsachse des Körpers des Benutzers, der die Zahnputzvorrichtung benutzt, zu erzeugen.

In einer Ausführungsform der Offenbarung umfasst die Zahnputzvorrichtung weiterhin eine Batterie, die die mindestens eine Antriebsvorrichtung mit Energie versorgt, und eine Steuerplatine, die den Betrieb der Zahnputzvorrichtung steuert, wobei die Silikonhülle die Batterie und die Steuerplatine im Wesentlichen vollständig umgibt. Da die Silikonhülle die Batterie und die Steuerplatine im Wesentlichen vollständig umgibt, wird der Schutz dieser besonders gegen Wasser empfindlichen Komponenten optimiert. Gleichzeitig lässt das Silikon ein Betätigen von Bedienelementen (z.B. ein An/Aus-Schalter) zu, die an der Zahnputzvorrichtung vorgesehen seien können.

In einer Ausführungsform der Offenbarung umfasst wenigstens einer der Mundeinsätze der Trägerstruktur einen ersten Mundeinsatzabschnitt und einen zweiten Mundeinsatzabschnitt, die mit einem Schwenkfederabschnitt verbunden sind, der in der Gebissebene(Transversalebene des menschlichen Körpers), die sich im Wesentlichen parallel zu und zwischen den Mundeinsätzen erstreckt, eine geringere Steifigkeit aufweist, als der erste und zweite Mundeinsatzabschnitt, um eine Verformung des jeweiligen Mundeinsatzes in der Gebissebene zu erleichtern. Als Gebissebene ist dabei die Ebene definiert, die den Kauflächen der Zähne des Benutzers entsprechenden Seiten der Mundeinsätze entsprechen.

Der wenigstens eine Schwenkfederabschnitt erlaubt ein gewisses Spiel der Trägerstruktur in der Bissebene des Benutzers, so dass die Anpassungsfähigkeit an das spezifische Gebiss des Benutzers ermöglicht wird ohne die Schwingungsübertragung in den hinteren Bereich (hintere Seitenzähne) zu stören, da der Schwenkfederabschnitt lediglich eine Flexibilität in der Bissebene (Transversalebene) fördern, aufgrund ihrer in die Bissebene abgeflachten Ausbildung jedoch die Schwingungsübertragung durch den entsprechenden Mundeinsatz zu den hinteren Seitenzähnen kaum beeinflussen. Zusätzlich ermöglicht die horizontale Flexibilität des Mundstücks ein erleichtertes Einführen in den Mundraum, was dem Würgereiz vorbeugen kann. Es sein angemerkt, dass die Anzahl von zwei Schwenkfederabschnitten pro Mundeinsatz zwar bevorzugt ist, jedoch auch ein oder mehr als zwei Schwenkfederabschnitte vorgesehen sein können.

In einer Ausführungsform der Offenbarung umfasst die Trägerstruktur weiterhin mindestens einen Mundeinsatzverbindungsabschnitt, der die Mundeinsätze der Trägerstruktur, vorzugsweise im Bereich der hinteren Seitenzähne des Benutzers, miteinander verbindet. Der mindestens eine Mundeinsatzverbindungsabschnitt kann bevorzugt einstückig mit den Mundeinsätzen der Trägerstruktur ausgebildet sein. Diese Verbindung durch den Mundeinsatzverbindungsabschnitt fördert ein gewünschtes Schwingungsverhalten der Trägerstruktur im Bereich der hinteren Seitenzähne und kann somit das Reinigungsergebnis der Zahnputzvorrichtung verbessern.

In einer Ausführungsform der Offenbarung umfasst die Trägerstruktur eine Gehäusefassung, wobei die Trägerstruktur und die Gehäusefassung einstückig ausgebildet sind und die Antriebsvorrichtung in die Gehäusefassung passt, wobei die Trägerstruktur und die Gehäusefassung bevorzugt aus Homo- oder Copolyamid, weiter bevorzugt lebensmittelechtem Homo- oder Copolyamid, weiterhin bevorzugt aus PA 6, PA, 6.6, PA 4.6, PA 11, PA 12, PA 1010, PA 610, Copolyamiden oder Polyamidmischungen aus diesen, und besonders bevorzugt PA 6.6 oder Copolyamiden oder Polyamidmischungen mit diesem gefertigt sind. Die Gehäusefassung der Trägerstruktur erlaubt eine korrekte Positionierung der Antriebsvorrichtung bezüglich der Trägerstruktur. Außerdem wird das Schwingungskopplungsverhalten von Antriebsvorrichtung und Trägerstruktur weiter optimiert. In einer Ausführungsform wird zur Fertigung der Trägerstruktur Polyamid 12 verwendet, z.B. in der Ausführungsform PA 2200 (weiß) oder PA 2201 (transparent). Dem Polyamid können optional Additive, Farbstoffe, und/oder verstärkende Fasern beigefügt werden.

In einer Ausführungsform der Offenbarung umfasst die Zahnputzvorrichtung gemäß einen Oberkieferabschnitt und einen Unterkieferabschnitt. Der Oberkieferabschnitt und der Unterkieferabschnitt entsprechen jeweils einem Negativabdruck eines Ober- oder Unterkiefers eines menschlichen Gebisses und sind jeweils während einer Benutzung der Vibrationszahnputzvorrichtung an innere und äußere Zahnflanken und, im Bereich der Seitenzähne, zusätzlich an Kauflächen des Ober- oder Unterkiefers des Benutzers angepasst. Die Silikonhülle weist am Ober- und Unterkieferabschnitt Reinigungsstrukturen auf, die die Zähne des Ober- oder Unterkiefers an den Zahnflanken und Kauflächen während des Betriebs berühren. Die Silikonhülle umfasst in einem Querschnitt senkrecht zu den Zahnflanken entsprechenden Flächen des Ober- und Unterkieferabschnitts im Bereich des Ober- und Unterkieferabschnitts jeweils eine M-Form, wobei die inneren Flanken der M-Form jeweils den Ober- und Unterkieferabschnitt bilden und die unteren Enden der äußeren Flanken der M-Form des Unterkieferabschnitts an entsprechenden unteren Enden von äußeren Flanken der M-Form des Oberkieferabschnitts befestigt sind.

In einer Ausführungsform der Offenbarung umfassen die Reinigungsstrukturen Längslamellen, die sich im Ober- und Unterkieferabschnitt jeweils parallel zu der Erstreckungsrichtung der Zahnzwischenräume des Benutzers und senkrecht zur Silikonhüllenwand des Ober- und Unterkieferabschnitts erstrecken.

Die Reinigungsstrukturen der Silikonhülle können in einer anderen Ausführungsform der Offenbarung Gummierungsschichten, die auf den Innenflächen der Silikonhülle im Bereich des Oberkieferabschnitts und des Unterkieferabschnitts angebracht sind, Reinigungselemente, die einstückig mit der Silikonhülle ausgebildet sind und/oder Streifenbürsten, die an dem Oberkieferabschnitt und dem Unterkieferabschnitt der Silikonhülle angebracht sind, umfassen. Beispiele und genauere Beschreibungen der Reinigungsstrukturen sowie deren Implementierung sind in der DE 102015109891 A1, Fig. 4 und [0050] beschrieben. So können die Reinigungsstrukturen in Form von Reinigungselementen vorgesehen sein.

In der vorliegenden Offenbarung sind insbesondere Reinigungselemente bevorzugt, die einstückig mit der Silikonhülle gebildet sind. Die Reinigungsstrukturen erstrecken sich bevorzugt im Wesentlichen senkrecht von der Oberfläche des Oberkieferabschnitts und des Unterkieferabschnitts der Silikonhülle. Im Bereich der Kauflächen und der vorderen und hinteren Zahnflächen sind in einer Ausführungsform jeweils mit der Hülle einstückige lamellen- oder zylinderförmige Reinigungselemente oder kurze Borsten vorgesehen. Die Reinigungsstrukturen/Borsten im Bereich der Kauflächen können kürzer und/oder dicker sein, als die an den Zahnflanken. Im Grenzbereich zwischen Zahn und Zahnfleisch sind dünnere Reinigungsstrukturen/Borsten bevorzugt, um Verletzungen des Zahnfleischs vorzubeugen. Eine besonders bevorzugte Ausführungsform sieht lamellenförmige Reinigungsstrukturen, so genannte Längslamellen, vor, die im Bereich der Zahnflanken senkrecht, also parallel zu den Zahnzwischenräumen des Benutzers, angeordnet sind. Die Bereiche der Kauflächen sind bevorzugt borsten- oder noppenförmig. Zudem nimmt die Länge der Längslamellen, also deren Erstreckung von der Silikonhülle zum Zahn hin, von den Schneidezähnen zu den hinteren Seitenzähnen zu. Die Länge der Längslamellen kann im Bereich der Zahnzwischenräume länger sein. Vorzugsweise haben die Reinigungsstrukturen eine Länge von 0,1 mm bis 2 mm und eine Dicke von 0,5 bis 2mm.

Es sei angemerkt, dass der Ausdruck "M-Form" im Zusammenhang der vorliegenden Offenbarung als grobe Angabe zu Verbindungspunkten der Silikonflächen zu verstehen ist und nicht als absolute Angabe zu Winkeln zwischen den Flächen oder Ausrichtung der Flächen. Die Flächen der M-Form können beispielsweise konkav/konvex gekrümmt, gewellt oder gerade sein. Das Tal in der Mitte der "M-Form" kann wie beim Buchstaben V-förmig spitz zulaufen, etwa im Bereich der Schneide und Eckzähne. Im Bereich der Seitenzähne sind hingegen Trog-förmige Querschnitte der Mitte der "M-Form" bevorzugt, die gerundete Ecken, Halbkreisform, oder nahezu rechtwinklige Ecken aufweisen können. Dem Fachmann ist es ein Leichtes, die Querschnitte entsprechend der Zahnform der jeweiligen Position des Oberkieferabschnitts und des Unterkieferabschnitts der Silikonhülle anzupassen. Generell sollte die Anpassung ein gewisses Spiel vorsehen (bevorzugt 0,1 bis 1,8mm), um Verletzung oder zu starke Abnutzung der Silikonoberflächen zu verhindern und Platz für die Reinigungsarbeit der Reinigungsstrukturen zu lassen.

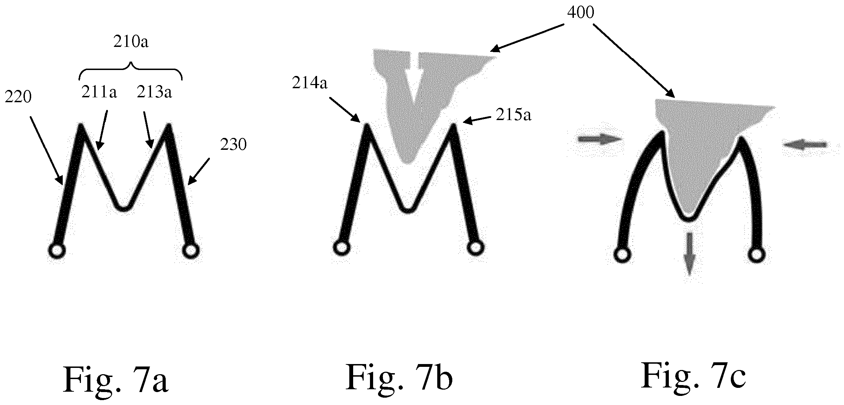

Durch die M-Form des Querschnitts der Silikonhülle der vorliegenden Ausführungsform wird eine verbesserte Anpassung an die individuelle Zahn- bzw. Gebissform des Benutzers erreicht. Nimmt der Benutzer ein Mundstück, das die Silikonhülle der Ausführungsform umfasst, vor der Benutzung in den Mund, drückt er seine Zähne in einer Art Bissbewegung in den Ober- bzw. Unterkieferabschnitt der Silikonhülle. Durch die M-Form hat die untere Fläche des Ober- bzw. Unterkieferabschnitts ein gewisses Spiel in Bissrichtung und folgt der Bissbewegung des Benutzers eine gewisse Strecke, bevorzugt etwa 1 bis 4 mm. Durch den entstehenden Materialmangel im Bereich der proximalen Grate der des Ober- bzw. Unterkieferabschnitts (d.h. der zwei oberen "Spitzen" der "M-Form"), werden diese Grate nach innen in Richtung des Zahns gezogen, was den Kontakt der Silikonhülle mit dem Zahn und somit die Reinigungswirkung der Vorrichtung verbessert. Der Effekt wird später mit Bezug auf Fig. 7 genauer erklärt.

### Kurze Beschreibung der Zeichnungen

Fig. 1 ist eine Perspektivansicht einer Zahnputzvorrichtung gemäß einer Ausführungsform der vorliegenden Offenbarung.
Fig. 2 ist eine Perspektivansicht einer Zahnputzvorrichtung ohne Silikonhülle gemäß einer Ausführungsform der vorliegenden Offenbarung.
Fig. 3 ist eine Perspektivansicht einer Zahnputzvorrichtung ohne Silikonhülle gemäß einer weiteren Ausführungsform der vorliegenden Offenbarung.
Fig. 4 ist eine Perspektivansicht von hinten der Zahnputzvorrichtung ohne Silikonhülle gemäß der Ausführungsform aus Fig. 3 der vorliegenden Offenbarung.
Fig. 5 ist eine Längsansicht der Zahnputzvorrichtung ohne Silikonhülle gemäß der Ausführungsform aus Fig. 3 der vorliegenden Offenbarung.
Fig. 6 ist eine Querschnittsansicht durch eine Zahnputzvorrichtung gemäß einer Ausführungsform der vorliegenden Offenbarung entlang der Schnittlinie "A" in Fig. 5.
Fig. 7a-7c sind schematische Diagramme, die ein Einsinken eines Zahns eines Benutzers vor der Benutzung einer Zahnputzvorrichtung einer Ausführungsform in einer Querschnittsansicht zeigen.
Fig. 8 ist eine Perspektivansicht einer Trägerstruktur gemäß einer Ausführungsform der vorliegenden Offenbarung.

### Ausführliche Beschreibung der bevorzugten Ausführungsformen

Im Folgenden wird die vorliegende Offenbarung anhand von Figuren beschrieben, die schematisch verschiedene beispielhafte Ausführungsformen zeigen. Die in den Figuren dargestellten Ausführungsformen sind nicht immer maßstabgerecht dargestellt, wobei zum Teil Abmessungen gewählt wurden, die das Prinzip der vorliegenden Erfindung klarer zur Geltung bringen. Sowohl in der Beschreibung als auch in den Figuren werden gleiche oder ähnliche Bezugszeichen verwendet, um auf gleiche oder ähnliche Elemente oder Komponenten Bezug zu nehmen. Um die Beschreibung knapp zu halten werden Elemente die bereits in anderen Figuren erwähnt wurden, nicht unbedingt in der Beschreibung zu jeder weiteren Figur nochmals explizit erwähnt. Es sollte zudem verstanden werden, dass alle gezeigten Ausführungsformen uneingeschränkt miteinander kompatibel und kombinierbar sind, solange nichts anderes in der Beschreibung angegeben ist.

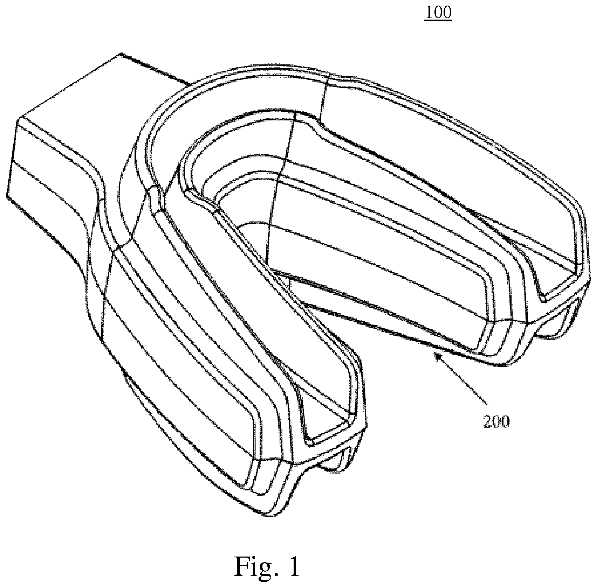

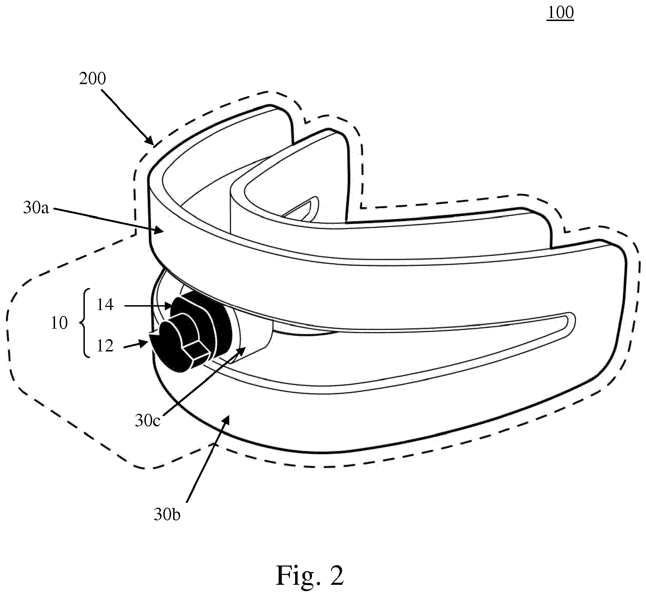

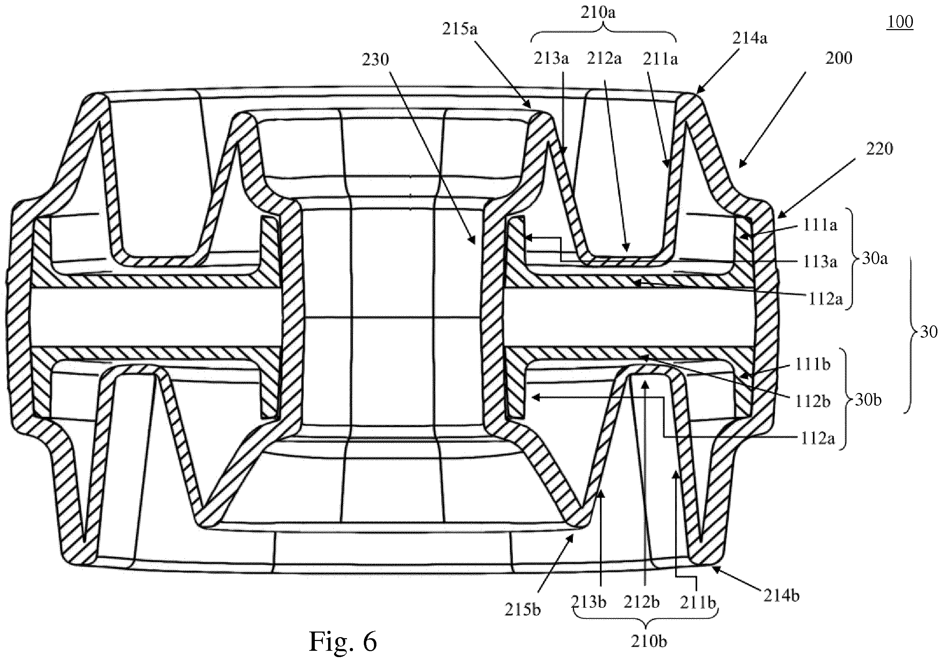

Fig. 1 ist eine Perspektivansicht einer Zahnputzvorrichtung 100 gemäß einer Ausführungsform der vorliegenden Offenbarung. Mit Bezug auf Fig. 1 stellt die vorliegende Offenbarung eine Zahnputzvorrichtung 100 für die gleichzeitige Reinigung mehrerer, vorzugsweise aller Zähne eines Benutzers, bereit. Die Zahnputzvorrichtung 100 der vorliegenden Ausführungsform umfasst eine Trägerstruktur (nicht dargestellt) und eine Silikonhülle 200, die über die Trägerstruktur gezogen ist und diese im Wesentlichen vollständig umgibt. Die Trägerstruktur und eine Antriebsvorrichtung (nicht dargestellt) einer Zahnputzvorrichtung 100 einer Ausführungsform wird nun mit Bezug auf Fig. 2-5 beschrieben. Die Struktur und Funktionsweise der Silikonhülle 200 wird anschließend mit Bezug auf Fig. 6 und 7 erörtert.

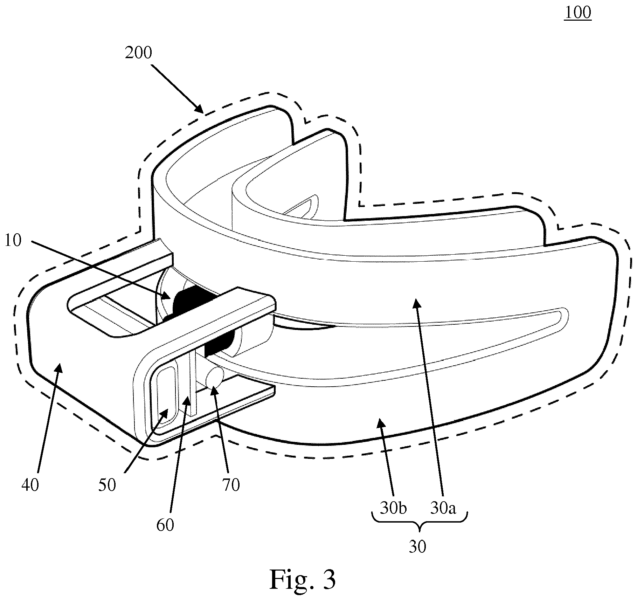

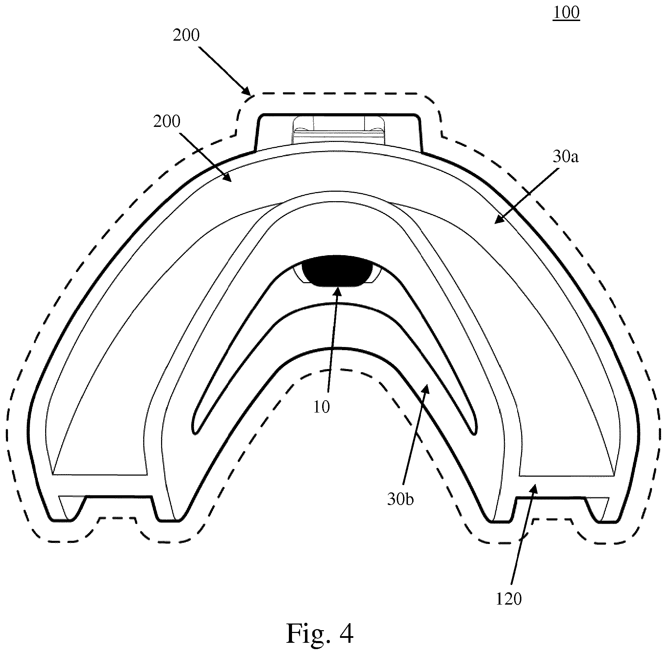

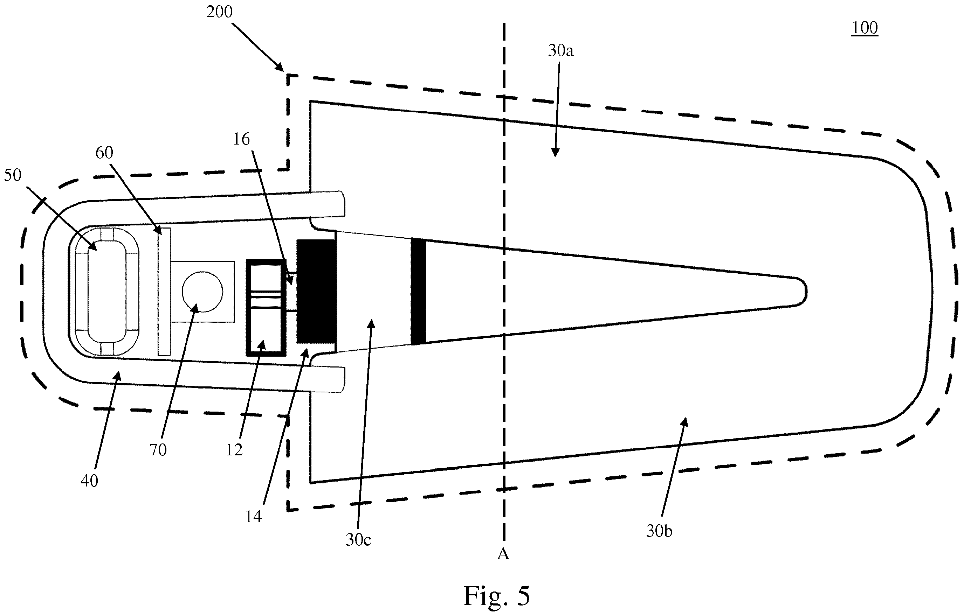

Fig. 2 ist eine Perspektivansicht einer Zahnputzvorrichtung 100 ohne Silikonhülle 200 gemäß einer Ausführungsform der vorliegenden Offenbarung. Fig. 3 ist eine Perspektivansicht einer Zahnputzvorrichtung 100 ohne Silikonhülle gemäß einer weiteren Ausführungsform der vorliegenden Offenbarung. Fig. 4 ist eine Perspektivansicht von hinten der Zahnputzvorrichtung 100 ohne Silikonhülle gemäß der Ausführungsform aus Fig. 3 der vorliegenden Offenbarung. Fig. 5 ist eine Längsquerschnittsansicht durch die Zahnputzvorrichtung 100 ohne Silikonhülle gemäß der Ausführungsform aus Fig. 3 der vorliegenden Offenbarung. Die Silikonhülle ist in diesen Darstellungen nicht explizit dargestellt, jedoch durch die gestrichelte Umrandung 200 angedeutet. Zudem sollte der Begriff "Silikon" im Zusammenhang mit der vorliegenden Offenbarung nicht eng ausgelegt werden. Vielmehr sollte dieser auch Silikon-ähnliche Rezepturen, Silikonmischungen oder Silikonverbundstoffe umfassen.

Mit Bezug auf Fig. 2-5 stellt die vorliegende Ausführungsform eine Zahnputzvorrichtung 100 mit integrierter Antriebsvorrichtung 10 für die freihändige, gleichzeitige Reinigung mehrerer, vorzugsweise aller Zähne eines Benutzers bereit. Die Zahnputzvorrichtung 100 umfasst in dieser bevorzugten Ausführungsform eine Trägerstruktur 30, die einen Mundeinsatz 30a für den Oberkiefer des Benutzers und einen Mundeinsatz 30b für den Unterkiefer des Benutzers aufweist. In der dargestellten Ausführungsform umfasst die Trägerstruktur 30 weiterhin einen Mundeinsatzverbindungsabschnitt 120, der die Mundeinsätze 30a, 30b, bevorzugt im Bereich der hinteren Seitenzähne, d.h. an den Enden der Mundeinsätze 30a, 30b miteinander verbindet. Die Verbindung kann die Schwingungsübertragung zu den hinteren Seitenzähnen fördern, da die zusätzliche Versteifung des Mundeinsatzverbindungsabschnitts 120 Schwingungsverluste an den verbunden hinteren Enden der Mundeinsätze 30a, 30b minimiert. Die Mundeinsatzverbindungsabschnitte 120 sollten als bevorzugtes, jedoch optionales Merkmal eingestuft werden.

Die Zahnputzvorrichtung 100 der vorliegenden Ausführungsform umfasst außerdem mindestens eine Antriebsvorrichtung 10 zur Erzeugung von Schwingungen. In den Fig. 2-5 ist jeweils nur eine Antriebsvorrichtung 10 dargestellt. Es sollte dem Fachmann jedoch klar sein, dass mehrere Antriebsvorrichtungen 10 ebenso entsprechend voneinander beanstandet vorgesehen sein können, um beispielsweise eine gleichmäßigere Schwingungsübertragung an die Zähne zu gewährleisten.

Die mindestens eine Antriebsvorrichtung 10 ist in dieser Ausführungsform zumindest teilweise in einem Raum zwischen dem Mundeinsatz 30a für den Oberkiefer und dem Mundeinsatz 30b für den Unterkiefer angeordnet und mit diesen verbunden, um die Schwingungen der mindestens einen Antriebsvorrichtung 10 an die Mundeinsätze 30a, 30b zu übertragen. In dieser Ausführungsform (siehe insbesondere Fig. 2 und 5) umfasst die Antriebsvorrichtung 10 eine Unwucht 12 und ein Motorgehäuse 14, in dem ein Schwingungsmotor (nicht dargestellt) angeordnet, ist, der die Unwucht 12 über eine Welle 16 in Rotation versetzen kann. Das Prinzip Gehäuse 14 zu Unwucht 12 kann natürlich auch umgekehrt werden, so dass das Motorgehäuse über eine rotierbar gelagerte Exzenterkopplung mit der Trägerstruktur 30 verbunden ist, wobei der Kopplungspunkt zwischen Exzenterkopplung und Trägerstruktur 30 in dem Raum zwischen den Mundeinsätzen 30a, 30b liegt.

Das Motorgehäuse 14 ist in dieser Ausführungsform in einer entsprechenden Gehäusefassung 30c der Trägerstruktur 30 angeordnet und dort beispielsweise durch Kleben oder Verspannen befestigt. Die Befestigung über eine passgenaue Gehäusefassung 30c kann die Schwingungsübertragung an die Mundeinsätze 30a, 30b verbessern. Wie aus Fig. 4 und 5 ersichtlich, ist die Gehäusefassung 30c als an beiden Enden offene Röhre ausgebildet. In anderen Ausführungsformen kann der Querschnitt der Gehäusefassung 30c jedoch auch polygonal oder oval sein. Die Röhre der Gehäusefassung 30c kann zudem am hinteren Ende auch geschlossen sein, um die Position des Gehäusemotors 14 bei der Montage festzulegen. Der Schwingungsmotor erzeugt Schwingungen bevorzugt durch Rotation der Unwucht 12 mit einer Rotationsachse, die im Wesentlichen parallel zu einer Gebissebene des Benutzers verläuft, die sich im Wesentlichen parallel zu und zwischen den Mundeinsätzen 30a, 30b erstreckt. D.h. die Rotationsachse der Unwucht 12 ist im Wesentlichen parallel zu der der Sagittalachse des Körpers des Benutzers, der die Zahnputzvorrichtung 100 benutzt. In einer bevorzugten Ausführungsform der Zahnputzvorrichtung 100 ist die Unwucht 12 außerhalb des Raums zwischen den Mundeinsätzen 30a, 30b und außerhalb des Gehäuses 14 der mindestens einen Antriebsvorrichtung 10 angeordnet (siehe Fig. 2 und 5).

Die Frequenz der erzeugen Vibration hängt in dieser Ausführungsform von der Drehzahl des Schwingungsmotor ab und liegt zwischen 3000 und 24.000 Umdrehungen pro Minute, was einer Frequenz von 50 - 400 Hz entspricht. Dieser Bereich liegt typischerweise etwas niedriger, als bei ähnlichen Gebissreinigungsgeräten im Stand der Technik. Durch die direkte Kopplung zwischen Trägerstruktur 30 und Antriebsvorrichtung 10 sind geringere Schwingungsfrequenzen möglich, ohne dass das Reinigungsergebnis darunter leiden würde. Bevorzugte Frequenzbereiche sind 70 - 350 Hz und besonders bevorzugt 100 - 330 Hz. Es wird jedoch betont, dass ein solcher Unwucht - Vibrationsmotor lediglich beispielhaft angeführt wird. Andere Vibrationsmotortypen, z.B. Piezo-Schwingungsmotoren oder Schallwandler (Schwingungserzeugung durch Oszillation eines Dauermagneten als Masse in einem EM-Wechselfeld), können gleichermaßen genutzt werden, um die Zahnputzvorrichtung in angemessene Vibration zu versetzen.

In der dargestellten Ausführungsform der Zahnputzvorrichtung 100 umfasst diese weiterhin eine Silikonhülle 200. Diese ist in den Fig. 2-5 lediglich durch eine gestrichelte Linie angedeutet und wird weiter unten mit Bezug auf die Fig. 6 und 7 näher beschrieben. Die Silikonhülle 200 umgibt die Trägerstruktur und die Antriebsvorrichtung 10 (abgesehen von einer Montage-Öffnung oder Anschlüssen zur Daten- oder Stromübertragung) vollständig. Die Silikonhülle 200 ist bevorzugt einstückig ausgebildet. Eine Öffnung (nicht dargestellt) und einen Silikondeckel (nicht dargestellt) können in der Silikonhülle 200 vorgesehen sein, um die Öffnung nach IP67 wasser- und staubdicht zu verschließen. IP67 sollte dabei als bevorzugte Schutzklasse angesehen werden. Je nach Bedarf können auch höhere oder niedrigere Schutzklassifikationen erfüllt sein. Die Silikonhülle ist inklusive der optionalen Montageöffnung mit Deckel einstückig bevorzugt durch Vakuumspritzguss gefertigt.

In einer Ausführungsform der Zahnputzvorrichtung 100 berühren die Mundeinsätze 30a, 30b die mindestens eine Antriebsvorrichtung 10 direkt. Alternativ können die Mundeinsätze 30a, 30b jeweils direkt über ein schwingungsdämpfendes Kissen (nicht dargestellt) mit der mindestens einen Antriebsvorrichtung 10 verbunden sein.

In einer Ausführungsform der Zahnputzvorrichtung 100 ist die mindestens eine Antriebsvorrichtung 10 konfiguriert, um Schwingungen entlang der Längsachse des Körpers des Benutzers, der die Zahnputzvorrichtung 100 benutzt, zu erzeugen. Eine solche auf/abBewegung kann im Verlauf eines Reinigungsprogramms durch horizontale Komponenten, also Bewegungen der Zahnputzvorrichtung 100 in der Gebissebene des Benutzers, variiert werden, um ein gleichmäßigeres Reinigungsergebnis zu erzielen.

Optionale weitere Schwingungsformen können eine leichte ovale oder kreisförmige Schwingungsform, bevorzugt in Sinuskurvenform umfassen. Unterschiedliche Schwingungen können nacheinander angewandt werden, um die Reinigungswirkung zu maximieren, so dass auch schwer erreichbare Stellen gründlich gereinigt werden können. Unterschiedliche Schwingungsformen können durch geeignete Anpassung von richtungsabhängigen Eigenfrequenzen der Trägerstruktur und Schwingungsfrequenz der Antriebsvorrichtung eingestellt werden. Für unterschiedliche Schwingungsebenen können z.B. mehrere Unwuchtmotoren vorgesehen werden, die gegeneinander verschwenkte Rotationsachsen aufweisen. Alternativ können auch andere Schwingungsmotortypen zueinander gekippt angeordnet werden, die zusammenwirkend verschiedene Schwingungsstrukturen ermöglichen.

In einem beispielhaften Schwingungsprogramm beginnt die Antriebsvorrichtung mit einer kreisförmigen Schwingung in der Frontalebene des menschlichen Körpers (parallel zu den Seiten der Schneidezähne), was einer linieren Bewegung entlang der Längsachse in der Sagittalebene des menschlichen Körpers des Benutzers entspricht. Die Kreisbewegung kann dann stufenweise oder fortlaufend über jeweils ovale Schwingungsformen (Hauptachse parallel zur Längsachse des menschlichen Körpers) zu einer kreisförmigen Schwingung in der Sagittalebene des menschlichen Körpers entwickeln, was wiederum einer linieren Bewegung entlang der Längsachse in der Frontalebene des menschlichen Körpers des Benutzers entspricht. Diese Beschreibung sollte jedoch nicht als die vorliegende Erfindung einschränkend ausgelegt werden.

In einer Ausführungsform der Offenbarung umfasst die Zahnputzvorrichtung 100 eine Batterie 50, die die mindestens eine Antriebsvorrichtung 10 mit Energie versorgt. Alternativ können auch eine kabelgebundene Stromversorgung oder die Versorgung über einen Kondensator umgesetzt werden. Die Verwendung eines Akkumulators, z.B. Li-Ionen-Batterie, ist jedoch bevorzugt. Die Zahnputzvorrichtung 100 umfasst zudem bevorzugt eine Steuerplatine 60, die den Betrieb der Zahnputzvorrichtung 100 steuert, wobei die Silikonhülle 200 die Batterie 50 und die Steuerplatine 60 im Wesentlichen vollständig umgibt. Dadurch sind Batterie 50 und Steuerplatine 60 vor äußeren Einflüssen, insbesondere Staub und Wasser, gut geschützt, so dass Fehlfunktionen der Zahnputzvorrichtung 100 vermieden werden können.

In Fig. 3 und 5 sind zudem ein Stützkäfig 40 und Stabilisationselemente 70 dargestellt, die die Antriebsvorrichtung 10, die Batterie 50 und die Steuerplatine 60 beherbergen und diese vor äußerer Krafteinwirkung schützen sollen. Stützkäfig 40 und Stabilisationselemente 70 können zusammen einstückig ausgebildet sein und werden während der Montage der Zahnputzvorrichtung 100, bevorzugt nach Einsetzen der Antriebsvorrichtung 10 in die Gehäusefassung 30c der Trägerstruktur 30, mit der Trägerstruktur 30 fest verbunden, beispielsweise durch Einstecken von Stiften am Stützkäfig 40 in entsprechende Öffnungen in der Trägerstruktur30 , durch Verkleben und/oder durch Verschweißen. Elektrische Verbindungen zwischen Antriebsvorrichtung 10, Batterie 50 und Steuerplatine 60 können während der Montage gelötet werden oder durch entsprechende Stecker an Antriebsvorrichtung 10 und Stützkäfig 40 während dessen Verbindung hergestellt werden.

Es sei angemerkt, dass in den Darstellungen der Fig. 2-5 einige der im Folgenden beschriebenen technischen Details nicht explizit dargestellt sind. Jedoch sollte dem Fachmann klar sein, dass die Ausführungsform der Fig. 2-5 uneingeschränkt mit den weiteren Merkmalen der folgenden Beschreibung kompatibel sind, beispielsweise die Silikonhülle 200 und die Schwenkfederabschnitte 130a und 130b.

Ein Querschnitt entlang der Schnittlinie A der Fig. 5 ist in Fig. 3 gezeigt. Mit Bezug auf Fig. 3 stellt die vorliegende Offenbarung eine Zahnputzvorrichtung 100 für die gleichzeitige Reinigung mehrerer, vorzugsweise aller Zähne eines Benutzers, bereit. Die Zahnputzvorrichtung 100 der vorliegenden Ausführungsform umfasst eine Trägerstruktur 30 und eine Silikonhülle 200, die über die Trägerstruktur 30 gezogen ist und diese annähernd vollständig umgibt. In der Querschnittszeichnung 3 sind die Trägerstruktur 30 von "links oben nach rechts unten" und die Silikonhülle 200 von "links unten nach rechts oben" schraffiert.

Die Silikonhülle 200 umfasst einen Oberkieferabschnitt 210a und einen Unterkieferabschnitt 210b, die jeweils einem Negativabdruck eines Ober- oder Unterkiefers eines menschlichen Gebisses entsprechen und jeweils während einer Benutzung der Zahnputzvorrichtung 100 an innere und äußere Zahnflanken und, im Bereich der Seitenzähne, an Kauflächen des Ober- oder Unterkiefers des Benutzers angepasst sind. Oberkieferabschnitt 210a und Unterkieferabschnitt 210b sind im Wesentlichen symmetrisch aufgebaut, abgesehen davon, dass der Oberkieferabschnitt 210a aufgrund der etwas größeren Zähne des Oberkiefers des menschlichen Gebisses größere Abmessungen und Abstände aufweist, wie auch in den Zeichnungen angedeutet ist. Die folgende Beschreibung ist entsprechend der Symmetrie vereinfacht aufgebaut.

Oberkieferabschnitt 210a und Unterkieferabschnitt 210b sind entsprechend im Bereich der Seitenzähne näherungsweise durch drei Wände, also die Außenwand 211a/211b, den Trogboden 212a/212b und die Innenwand213a/213b des Oberkiefer/Unterkieferabschnitts, gebildet. Im Bereich der Eck- bzw. Schneidezähne sind Oberkieferabschnitt 210a und Unterkieferabschnitt 210b näherungsweise V-förmig durch zwei Wände, also die Außenwand 211a/211b und die Innenwand 213a/213b des Oberkiefer/Unterkieferabschnitts gebildet.

Anders ausgedrückt, weist der Querschnitt senkrecht zu den Zahnflanken entsprechenden Flächen 211a-213a bzw. 211b-213b des Ober- und Unterkieferabschnitts im Bereich des Ober- und Unterkieferabschnitts jeweils eine M-Form auf, wobei die Mitte der M-Form im Bereich der Seitenzähne Trog-förmig und im Bereich der Eck- und Schneidezähne V-förmig. Die Außenflanken der M-Form des Ober- und Unterkieferabschnitts werden durch den entsprechenden oberen/unteren Teil einer Außenwand 220 der Silikonhülle 200 und den entsprechenden oberen/unteren Teil einer Innenwand 230 der Silikonhülle 200 gebildet. Die Außenwand 211a/211b des Oberkiefer/Unterkieferabschnitts ist durch einen Außengrat 214a/b mit der Außenwand 220 der Silikonhülle 200 verbunden. Entsprechend ist die Innenwand 213a/213b des Oberkiefer/Unterkieferabschnitts durch einen Innengrat 215a/b mit der Innenwand 230 der Silikonhülle 200 verbunden.

Anders ausgedrückt, stellt die Kombination aus oberen/unteren Teil der Außenwand 220 und der Innenwand 230 der Silikonhülle 200, dem Innengrat 215a/b, dem Außengrat 214a/b, der Außenwand 211a/211b des Oberkiefer/Unterkieferabschnitts, der Innenwand 213a/213b des Oberkiefer/Unterkieferabschnitts und, im Bereich, der zur Reinigung der Seitenzähne des Benutzers vorgesehen ist, zusätzlich dem Trogboden 212a/212b den M-förmigen Querschnitt bereit, der eine besondere Anpassungsfähigkeit des Mundstücks an das Gebiss des Benutzers ermöglicht, wie insbesondere unten mit Bezug auf Fig. 7a-c beschrieben werden wird.

Die Zahnputzvorrichtung 100 gemäß der vorliegenden Ausführungsform umfasst weiterhin eine Trägerstruktur 30, die nun mit Bezug auf Fig. 6 näher beschrieben wird. Wie in Fig. 6 gezeigt, umfasst die Trägerstruktur 30 der vorliegenden Ausführungsform einen Mundeinsatz 30a für den Oberkiefer des Benutzers und einen Mundeinsatz 30b für den Unterkiefer des Benutzers. Ähnlich wie der Oberkieferabschnitt 210a und der Unterkieferabschnitt 210b der Silikonhülle 200, sind auch Mundeinsätze 30a, 30b im Wesentlichen symmetrisch aufgebaut und die folgende Beschreibung ist entsprechend vereinfacht.

Die Mundeinsätze 30a, 30b umfassen jeweils einen Mundeinsatzboden 112a/112b, der im Wesentlichen der Form der Bissfläche eines menschlichen Gebisses entspricht. Bevorzugt, wie in Fig. 6 gezeigt, umfassen die Mundeinsätze 30a, 30b jeweils eine Außenwand 111a/111b und eine Innenwand 113a/113b, die sich jeweils in etwa in einem rechten Winkel von dem Mundeinsatzboden 112a/112b erstrecken und durch Stützung der Befestigung der Silikonhülle 200 dienen können. Außenwand 111a/111b und Innenwand 113a/113b laufen im Wesentlichen durchgängig am Innen/Außenrand des Mundeinsatzboden 112a/112b entlang, sind im Bereich der hintersten Seitenzähne jedoch durch eine Lücke beanstandet, um während der Montage das Aufziehen der Silikonhülle 200 über die Trägerstruktur zu erleichtern. In der vorliegenden Ausführungsform sind die Mundeinsätze 30a, 30b im hinteren Endbereich der hinteren Seitenzähne über einen Mundeinsatzverbindungsabschnitt 120 miteinander einstückig oder durch Verkleben oder Verschweißen verbunden.

Wie in Fig. 6 dargestellt ist, ist der Trogboden 212a/212b bzw. der untere Abschnitt der V-Form im Bereich der Schneidezähne mit dem Mundeinsatzboden 112a/112b verbunden. Diese Verbindung kann durch hakenförmige oder Pilz-förmige Vorsprünge (nicht dargestellt) der Silikonhülle 200 erfolgen, die mit entsprechend vorgesehenen Löchern oder länglichen Öffnungen in der Trägerstruktur 30, bevorzugt dem Mundeinsatzboden 112a/112b zusammenwirken. Eine weitere bevorzugte Verbindungsart wird durch Verkleben oder Verschweißen von Silikonhülle 200 am Trogboden 212a/212b bzw. dem unteren Abschnitt der V-Form mit dem Mundeinsatzboden 112a/112b erreicht, optional über eine Formpassung mit einem Verbindungssteg am Trogboden 212a/212b der Silikonhülle 200, sowie der Mundeinsätze 30a, 30b.

In Fig. 6 ist ebenfalls dargestellt, wie die Innenwand 230 und die Außenwand 220 der Silikonhülle jeweils über zwei Knicke oder Biegungen auf Höhe den Innenwänden 113a/113b bzw. den Außenwänden 111a/111b der Trägerstruktur 30 abgestützt sind. Diese Stützte verstärkt den unten näher beschriebenen Effekt der M-Form des Querschnitts der Silikonhülle 200. Außerdem kann die flexible Silikonhülle durch die in die Biegungen vorstehenden Mundeinsatzwände 111a/b und 113a/b leicht unter Spannung versetzt werden, was ein Verrutschen oder Reibung zwischen Trägerstruktur 30 und Silikonhülle 200 verhindern kann. Der abstützende Effekt kann alternativ oder zusätzlich zu den gezeigten Biegungen der Innenwand 230 und der Außenwand 220 der Silikonhülle auch durch Einkerbungen (nicht gezeigt) in der Silikonhülle 200 und/oder zusätzliche Stege (nicht gezeigt), die sich von der Innenwand 230 bzw. der Außenwand 220 zur Trägerstruktur 30 erstrecken, erreicht bzw. unterstützt werden.

Etwa im Bereich der Eckzähne können die Mundeinsätze 30a, 30b der Trägerstruktur 30 der vorliegenden Ausführungsform optional einen Schwenkfederabschnitt 130a/130b aufweisen. Dieser ist jeweils, wie abgebildet, durch Aussparungen in Mundeinsatzboden 112a/112b und Außenwand 111a/111b (optional aber nicht dargestellt auch in der Innenwand 113a/113b) der Mundeinsätze 30a, 30b gebildet, so dass die Mundeinsätze 30a, 30b jeweils durch mäandrierende und verjüngte Abschnitte in der Ebene des Mundeinsatzbodens 112a/112b unterteilt sind. Der Schwenkfederabschnitt 130a/130b erlaubt ein gewisses Spiel der Trägerstruktur 30 in der Bissebene des Benutzers, so dass die Anpassungsfähigkeit an das spezifische Gebiss des Benutzers ermöglicht wird ohne die Schwingungsübertragung in den hinteren Bereich (hintere Seitenzähne) zu stören. Zusätzlich ermöglicht die horizontale Flexibilität des Mundstücks ein erleichtertes Einführen in den Mundraum, was dem Würgereiz vorbeugt, und den Komfort für den Benutzer erhöht.

Fig. 7a-c zeigen am Beispiel eines Oberkieferabschnitts 210a schematisch, wie der M-förmige Querschnitt der Silikonhalterung 200 bei der Benutzung den Kontakt zwischen Silikonhülle und Zähnen des Benutzers fördert. Andere Elemente der Zahnputzvorrichtung 100 wurden der Übersichtlichkeit halber weggelassen. Wie in Fig. 7a gezeigt, wird die M-Form des Querschnitts des Oberkieferabschnitts 210a durch obere Teile der Innenwand 230 und der Außenwand 220 der Silikonhülle, die Außenwand 211a und die Innenwand 213a des Oberkieferabschnitts 210a gebildet. Die Punkte an den Unteren Enden der oberen Teile der Innenwand 230 und der Außenwand 220 in Fig. 7a-c deuten an, dass diese durch Verbindung mit der Trägerstruktur (nicht dargestellt) oder eine entsprechende Gegenbewegung am Unterkieferabschnitt (nicht dargestellt) gestützt sind.

Wie in Fig. 7b und c dargestellt wird, wird durch die M-Form des Querschnitts der Silikonhülle der vorliegenden Ausführungsform eine verbesserte Anpassung an die individuelle Zahn- bzw. Gebissform des Benutzers erreicht. Nimmt der Benutzer die Zahnputzvorrichtung 100 vor der Benutzung in den Mund, drückt er seine Zähne 400 in einer Art Bissbewegung in den Ober- bzw. Unterkieferabschnitt der Silikonhülle, wie in Fig. 7b gezeigt. Durch die M-Form hat die untere Fläche des Ober- bzw. Unterkieferabschnitts ein gewisses Spiel und folgt, durch den senkrechten Pfeil in Fig. 7c angedeutet, der Bissbewegung des Benutzers eine gewisse Strecke, bevorzugt etwa 1 bis 4 mm. Durch den entstehenden Materialmangel im Bereich der proximalen Grate 214a und 215a der des Ober- bzw. Unterkieferabschnitts, werden diese Grate 214a, 215a nach innen in Richtung des Zahns gezogen, wie durch die horizontalen Pfeile in Fig. 7c angedeutet wird. Dieses Anpressen der Grate 214a, 215a als Reaktion auf die Bissbewegung des Benutzers verbessert den Kontakt der Silikonhülle mit dem Zahn 400 des Benutzers stark und somit kann die Reinigungswirkung einer Vibrationszahnreinigungsvorrichtung unter Verwendung eines Mundstücks gemäß der vorliegenden Erfindung deutlich erhöht werden.

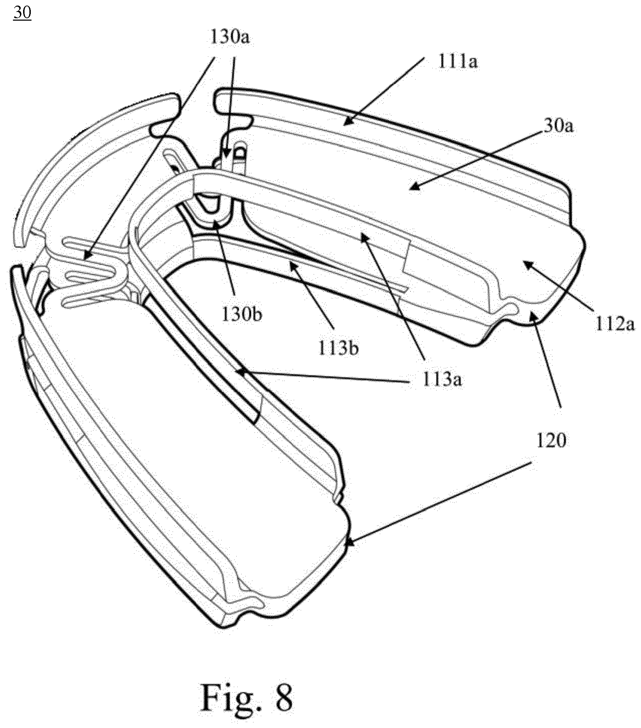

Fig. 8 ist eine Perspektivansicht einer Trägerstruktur gemäß einer Ausführungsform der vorliegenden Offenbarung. Es sollte generell verstanden werden, dass die in Fig. 8 gezeigte Ausführungsform uneingeschränkt mit den Ausführungsformen der Fig. 1-7 kompatibel ist.

Wie in Fig. 8 gezeigt, umfasst die Trägerstruktur 30 der vorliegenden Ausführungsform einen Mundeinsatz für den Oberkiefer 30a und einen Mundeinsatz für den Unterkiefer (kein Bezugszeichen). Ähnlich wie die Mundeinsätze der obigen Ausführungsformen, sind auch Mundeinsätze dieser Ausführungsform im Wesentlichen symmetrisch aufgebaut und die folgende Beschreibung ist entsprechend vereinfacht.

Die Mundeinsätze 30a, 30b umfassen jeweils einen Mundeinsatzboden 112a, der im Wesentlichen der Form der Bissfläche eines menschlichen Gebisses entspricht. Bevorzugt, wie in Fig. 8 und gleichsam in Fig. 6 gezeigt, umfassen die Mundeinsätze 30a, 30b eine Außenwand 111a und eine Innenwand 113a, 113b, die sich jeweils in etwa in einem rechten Winkel von dem Mundeinsatzboden 112a erstrecken und zur Stützung oder Befestigung einer Silikonhülle (nicht dargestellt) dienen können, wie sie oben beschrieben wurde. Außenwand 111a und Innenwand 113a, 113b laufen im Wesentlichen durchgängig am Innen- und Außenrand des Mundeinsatzboden 112a entlang, sind im Bereich der hintersten Seitenzähne jedoch durch eine Lücke beanstandet, um z.B. während der Montage das Aufziehen einer Silikonhülle über die Trägerstruktur zu erleichtern. In der vorliegenden Ausführungsform sind die Mundeinsätze 30a, 30b im hinteren Endbereich der hinteren Seitenzähne miteinander über einen Mundeinsatzverbindungsabschnitt 120 durch Verkleben, Verschweißen, oder ihre einstückige Ausbildung miteinander verbunden. Die Mundeinsätze 30a, 30b haben somit einem im Wesentlichen Trog-förmigen Querschnitt mit Wänden, die sie im Wesentlichen senkrecht vom Trogboden erstrecken. Die entstehenden Ecken zwischen Wänden und Boden sind bevorzugt abgerundet.

Etwa im Bereich der Eckzähne in Fig. 8 können die Mundeinsätze 30a, 30b der Trägerstruktur 30 der vorliegenden Ausführungsform einen Schwenkfederabschnitt 130a/130b aufweisen. Dieser ist jeweils, wie abgebildet, durch Aussparungen in Mundeinsatzboden 112a und Außenwand 111a (optional aber nicht dargestellt auch in der Innenwand 113a/113b) der Mundeinsätze 30a, 30b gebildet, so dass die Mundeinsätze 30a, 30b jeweils durch mäandrierende und/oder verjüngte Abschnitte in der Ebene des Mundeinsatzbodens 112a unterteilt sind. Der Schwenkfederabschnitt 130a/130b erlaubt ein gewisses Spiel der Trägerstruktur in der Bissebene des Benutzers, so dass die Anpassungsfähigkeit an das spezifische Gebiss des Benutzers ermöglicht wird ohne die Schwingungsübertragung in den hinteren Bereich (hintere Seitenzähne) zu stören, da die Schwenkfederabschnitt 130a/130b lediglich eine Flexibilität in der Bissebene (Transversalebene) fördern, aufgrund ihrer in die Bissebene abgeflachten Ausbildung jedoch die Schwingungsübertragung durch die Mundeinsätze 30a, 30b zu den hinteren Seitenzähnen kaum beeinflussen. Es sein angemerkt, dass die Anzahl von zwei Schwenkfederabschnitten 130a/130b pro Mundeinsatz 30a, 30b zwar bevorzugt ist, jedoch auch ein oder mehr als zwei Schwenkfederabschnitte vorgesehen sein können.

Die Ausbildung der Schwenkfederabschnitte 130a/130b der Mundeinsätze 30a, 30b der Trägerstruktur 30 dieser Ausführungsform kann bevorzugt durch Einschnitte, Einkerbungen oder Mäanderbildung durch Biegen erfolgen. Besonders bevorzugt wird die Form der Schwenkfederabschnitte 130a/130b jedoch durch Formung der Trägerstruktur im Spritzguss oder im 3D-Druck gebildet. Es sollte ferner beachtet werden, dass die Schwenkfederabschnitte 130a/130b in Richtung der durch die Antriebsvorrichtung erzeugten vertikalen Schwingungen eher steif sein sollten. Die bevorzugte Schwingung/Federung der Schwenkfederabschnitte 130a/130b ist parallel zu Mundeinsatzboden 112a bzw., im Querschnitt, dem Trogboden der Trägerstruktur 30 der zweiten Ausführungsform.

Die Aussparungen in den Außenwänden 111a und 111b in Fig. 8 können in einer Ausführungsform jeweils durch einen Vibrationskopplungsmechanismus (nicht dargestellt) überbrückt sein. Der Vibrationskopplungsmechanismus dieser Ausführungsform fördert die Vibrationsübertragung zu den hinteren Seitenzähnen (Backenzähnen) und kann daher die Reinigungswirkung der Zahnputzvorrichtung 100 verbessern. Der Vibrationskopplungsmechanismus umfasst beispielsweise einen ersten Kopplungsabschnitt und einen zweiten Kopplungsabschnitt, die an gegenüberliegenden Seiten der Aussparung der Außenwand 111b angeordnet sind, sich zueinander erstrecken und einander berühren. In der vorliegenden Ausführungsform ist der erste Kopplungsabschnitt als ein verjüngter Fortsatz der Außenwand 111b im Bereich der Schneidezähne gebildet, der in einen entsprechenden U-förmigen Fortsatz der gegenüberliegenden Außenwand 111b im Bereich der Seitenzähne eingreift. Dieses Prinzip kann auch umgekehrt werden oder alternative Eingriffsformen vorgesehen sein und sollte daher nicht einschränkend ausgelegt werden. So sind Vorsprünge in V-Form oder W-Form ebenso umsetzbar, wie eine Drehung des dargestellten Prinzips um 90° um eine Achse, die mitten durch die Außenwand 111b an der entsprechenden Stelle verläuft. Durch die Länge der Kontaktfläche zwischen den Kopplungsabschnitten kann die Vibrationsübertragung zu den hinteren Seitenzähnen angepasst werden, z.B. optimiert für bestimmte Frequenzbereiche. Beispielhaft ist für Frequenzen zwischen 50 Hz und 400 Hz eine Länge der Kontaktfläche 1 bis 10 mm, bevorzug 2 bis 7 mm vorteilhaft. Die Kontaktfläche zwischen den Kopplungsabschnitten variiert auch je nach Verformung der Schwenkfederabschnitte 130a und 130b, so dass unterschiedliche Längen für unterschiedliche Gebissformen vorgesehen sein können.

## Patentansprüche

1. Zahnputzvorrichtung (100) mit integrierter Antriebsvorrichtung für die freihändige, gleichzeitige Reinigung mehrerer, vorzugsweise aller Zähne eines Benutzers, umfassend:
eine Trägerstruktur (30), umfassend:
einen Mundeinsatz (30a) für den Oberkiefer des Benutzers und einen Mundeinsatz (30b) für den Unterkiefer des Benutzers; und
mindestens eine Antriebsvorrichtung (10) zur Erzeugung von Schwingungen,
wobei die mindestens eine Antriebsvorrichtung (10) zumindest teilweise in einem Raum zwischen dem Mundeinsatz (30a) für den Oberkiefer und dem Mundeinsatz (30b) für den Unterkiefer angeordnet und mit diesen verbunden ist, um die Schwingungen der mindestens einen Antriebsvorrichtung (10) an die Mundeinsätze (30a, 30b) zu übertragen; wobei die Zahnputzvorrichtung (100) **dadurch gekennzeichnet ist, dass** sie weiterhin umfasst: eine Silikonhülle (200), die die Trägerstruktur (30) und die mindestens eine Antriebsvorrichtung (10) im Wesentlichen vollständig umgibt.

2. Zahnputzvorrichtung (100) gemäß einem der vorstehenden Ansprüche, wobei die mindestens eine Antriebsvorrichtung (10) umfasst:
einen Schwingungsmotor zur Erzeugung von Schwingungen, und
ein Gehäuse (14), wobei der Schwingungsmotor zumindest teilweise in dem Gehäuse (14) angeordnet und mit dem Gehäuse verbunden ist, um die erzeugten Schwingungen über das Gehäuse (14) an die Mundeinsätze (30a, 30b) zu übertragen.

3. Zahnputzvorrichtung (100) gemäß Anspruch 1, wobei die Silikonhülle (200) einstückig ausgebildet ist und eine Öffnung und einen Silikondeckel umfasst, der die Öffnung nach IP67 wasser- und staubdicht verschließt.

4. Zahnputzvorrichtung (100) gemäß einem der Ansprüche 1 bis 3, wobei der Schwingungsmotor Schwingungen durch Rotation einer Unwucht (12) erzeugt und eine Rotationsachse der Unwucht (12) im Wesentlichen parallel zu einer Gebissebene des Benutzers verläuft, die sich im Wesentlichen parallel zu und zwischen den Mundeinsätzen (30a, 30b) erstreckt, d.h. die Rotationsachse der Unwucht (12) im Wesentlichen parallel zu der der Sagittalachse des Körpers des Benutzers ist, der die Zahnputzvorrichtung (100) benutzt.

5. Zahnputzvorrichtung (100) gemäß Anspruch 4, wobei die Unwucht (12) außerhalb des Raums zwischen den Mundeinsätzen (30a, 30b) und außerhalb des Gehäuses (14) der mindestens einen Antriebsvorrichtung (10) angeordnet ist.

6. Zahnputzvorrichtung (100) gemäß einem der vorstehenden Ansprüche, wobei die Mundeinsätze (30a, 30b) die mindestens eine Antriebsvorrichtung (10) direkt berühren oder jeweils direkt über ein schwingungsdämpfendes Kissen mit der mindestens einen Antriebsvorrichtung (10) verbunden sind.

7. Zahnputzvorrichtung (100) gemäß einem der vorstehenden Ansprüche, wobei die mindestens eine Antriebsvorrichtung (10) konfiguriert ist, um Schwingungen von 50 - 400 Hz, bevorzugt 70 - 350 Hz und besonders bevorzugt von 100 - 330 Hz zu erzeugen.

8. Zahnputzvorrichtung (100) gemäß einem der vorstehenden Ansprüche, wobei die mindestens eine Antriebsvorrichtung (10) konfiguriert ist, um Schwingungen entlang der Längsachse des Körpers des Benutzers, der die Zahnputzvorrichtung (100) benutzt, zu erzeugen.

9. Zahnputzvorrichtung (100) gemäß einem der Ansprüche 1 bis 8, ferner umfassend:
eine Batterie (50), die die mindestens eine Antriebsvorrichtung (10) mit Energie versorgt, und eine Steuerplatine (60), die den Betrieb der Zahnputzvorrichtung (100) steuert, wobei die Silikonhülle (200) die Batterie (50) und die Steuerplatine (60) im Wesentlichen vollständig umgibt.

10. Zahnputzvorrichtung (100) gemäß einem der vorstehenden Ansprüche, wobei wenigstens einer der Mundeinsätze (30a, 30b) der Trägerstruktur (30) einen ersten Mundeinsatzabschnitt und einen zweiten Mundeinsatzabschnitt umfasst, die mit einem Schwenkfederabschnitt (130a, 130b) verbunden sind, der in der Gebissebene, die sich im Wesentlichen parallel zu und zwischen den Mundeinsätzen (30a, 30b) erstreckt, eine geringere Steifigkeit aufweist, als der erste und zweite Mundeinsatzabschnitt, um eine Verformung des jeweiligen Mundeinsatzes (30a, 30b) in der Gebissebene zu erleichtern.

11. Zahnputzvorrichtung (100) gemäß einem der vorstehenden Ansprüche, wobei die Trägerstruktur weiterhin umfasst:
einen Mundeinsatzverbindungsabschnitt, der die Mundeinsätze (30a, 30b) der Trägerstruktur, vorzugsweise im Bereich der hinteren Seitenzähne des Benutzers, miteinander verbindet.

12. Zahnputzvorrichtung (100) gemäß einem der vorstehenden Ansprüche, wobei die Trägerstruktur eine Gehäusefassung umfasst, wobei die Trägerstruktur und die Gehäusefassung einstückig ausgebildet sind und die Antriebsvorrichtung in die Gehäusefassung passt, wobei die Trägerstruktur und die Gehäusefassung bevorzugt aus PA 6, PA, 6.6, PA 4.6, PA 11, PA 12, PA 1010, PA 610, Copolyamiden oder Polyamidmischungen aus diesen, und besonders bevorzugt PA 6.6 oder Copolyamiden oder Polyamidmischungen mit diesem gefertigt sind.

13. Zahnputzvorrichtung (100) gemäß einem der Ansprüche 1 - 12, wobei die Silikonhülle (200) umfasst:
einen Oberkieferabschnitt (210a); und
einen Unterkieferabschnitt (210b), wobei
der Oberkieferabschnitt (210a) und der Unterkieferabschnitt (210b) jeweils einem Negativabdruck eines Ober- oder Unterkiefers eines menschlichen Gebisses entsprechen und
jeweils während einer Benutzung der Vibrationszahnputzvorrichtung an innere und äußere Zahnflanken und, im Bereich der Seitenzähne, zusätzlich an Kauflächen des Ober- oder
Unterkiefers des Benutzers angepasst sind, wobei
die Silikonhülle (200) am Ober- und Unterkieferabschnitt (210a, 210b) Reinigungsstrukturen aufweist, die angepasst sind, um die Zähne des Ober- oder Unterkiefers an den Zahnflanken und Kauflächen während des Betriebs zu berühren, und wobei
die Silikonhülle (200) in einem Querschnitt senkrecht zu den Zahnflanken entsprechenden Flächen (211a, 211b, 213a, 213b) des Ober- und Unterkieferabschnitts (210a, 210b) im Bereich des Ober- und Unterkieferabschnitts (210a, 210b) jeweils eine M-Form umfasst,
wobei die inneren Flanken (211a, 211b, 212a, 212b, 213a, 213b) der M-Form jeweils den Ober- und Unterkieferabschnitt (210a, 210b) bilden und die unteren Enden der äußeren Flanken der M-Form (220, 230) des Unterkieferabschnitts (210b) an entsprechenden unteren Enden von äußeren Flanken (220, 230) der M-Form des Oberkieferabschnitts (210a) verbunden sind.

14. Zahnputzvorrichtung (100) gemäß Anspruch 13, wobei
die Reinigungsstrukturen Längslamellen umfassen, die sich im Ober- und Unterkieferabschnitt (210a, 210b) jeweils parallel zu der Erstreckungsrichtung der Zahnzwischenräume des Benutzers und senkrecht zur Silikonhüllenwand des Ober- und Unterkieferabschnitts (210a, 210b) erstrecken.

## Claims

1. A tooth cleaning device (100) with integrated drive device for hands-free, simultaneous cleaning of several, preferably all, teeth of a user, comprising:
a support structure (30) comprising:
a mouth insert (30a) for the user's upper jaw and a mouth insert (30b) for the user's lower jaw; and
at least one drive device (10) for generating vibrations;
wherein said at least one drive device (10) being at least partially disposed in a space between said upper jaw mouth insert (30a) and said lower jaw mouth insert (30b) and being and connected to said upper jaw mouth insert (30a) and said lower jaw mouth insert (30b), for transmitting vibrations of said at least one drive device (10) to said mouth inserts (30a, 30b), wherein the toothbrushing device (100) is **characterized in that** it further comprises:
a silicone shell (200) substantially completely surrounding the support structure (30) and the at least one drive device (10).

2. Tooth cleaning device (100) according to any one of the preceding claims, wherein the at least one drive device (10) comprises:
a vibration motor for generating vibrations, and
a housing (14), wherein the vibration motor is at least partially disposed inside the housing (14) and connected to the housing to transmit the generated vibrations to the mouth inserts (30a, 30b) via the housing (14).

3. Tooth cleaning device (100) according to claim 1, wherein the silicone shell (200) is integrally formed and comprises an opening and a silicone cover that closes the opening in a waterproof and dustproof manner according to IP67.

4. Tooth cleaning device (100) according to any one of claims 1 to 3, wherein the vibration motor generates vibrations by rotating an unbalance (12) and a rotation axis of the unbalance (12) is substantially parallel to a dentition plane of the user extending substantially parallel to and between the mouth inserts (30a, 30b), i.e. the rotation axis of the unbalance (12) is substantially parallel to that of the sagittal axis of the body of the user using the tooth cleaning device (100).

5. Tooth cleaning device (100) according to claim 4, wherein said unbalance (12) is located outside the space between said mouth inserts (30a, 30b) and outside the housing (14) of said at least one drive device (10).

6. Tooth cleaning device (100) according to any one of the preceding claims, wherein the mouth inserts (30a, 30b) directly contact the at least one drive device (10) or are each directly connected to the at least one drive device (10) via a vibration-damping pad.

7. Tooth cleaning device (100) according to any one of the preceding claims, wherein the at least one drive device (10) is configured to generate vibrations of 50 - 400 Hz, preferably 70 - 350 Hz, and particularly preferably 100 - 330 Hz.

8. Tooth cleaning device (100) according to any one of the preceding claims, wherein the at least one drive device (10) is configured to generate vibrations along the longitudinal axis of the body of the user using the tooth brushing device (100).

9. Tooth cleaning device (100) according to any one of claims 1 to 8, further comprising:
a battery (50) that powers the at least one drive device (10), and a control board (60) that controls the operation of the tooth cleaning device (100), wherein the silicone shell (200) substantially completely surrounds the battery (50) and the control board (60).

10. Tooth cleaning device (100) according to any one of the preceding claims, wherein at least one of the mouth inserts (30a, 30b) of the support structure (30) comprises a first mouth insert portion and a second mouth insert portion connected to a pivot spring portion (130a, 130b), which has a lower rigidity in the bit plane extending substantially parallel to and between the mouth inserts (30a, 30b) than the first and second mouth insert portions to facilitate deformation of the respective mouth insert (30a, 30b) in the bit plane.

11. Tooth cleaning device (100) according to any one of the preceding claims, wherein the support structure further comprises:
a mouth insert connecting portion connecting the mouth inserts (30a, 30b) of the support structure to each other, preferably in the region of the user's posterior lateral teeth.

12. Tooth cleaning device (100) according to any one of the preceding claims, wherein the support structure comprises a housing socket, wherein the support structure and the housing socket are integrally formed and the drive device fits into the housing socket, wherein the support structure and the housing socket are preferably made of PA 6, PA, 6.6, PA 4.6, PA 11, PA 12, PA 1010, PA 610, copolyamides or polyamide blends thereof, and particularly preferably PA 6.6 or copolyamides or polyamide blends thereof.

13. Tooth cleaning device (100) according to any one of claims 1 - 12, wherein the silicone shell (200) comprises:
an upper jaw portion (210a); and
a lower jaw portion (210b), wherein
the upper jaw portion (210a) and the lower jaw portion (210b) each correspond to a negative impression of an upper or lower jaw of a human dentition and are each adapted to inner and outer tooth flanks and, in the region of the posterior teeth, additionally to occlusal surfaces of the user's upper or lower jaw during a use of the vibratory tooth cleaning device, wherein
the silicone shell (200) has, at the upper and lower jaw portions (210a, 210b), cleaning structures adapted to contact the teeth of the upper or lower jaw at the tooth flanks and occlusal surfaces during operation, and wherein
the silicone shell (200) comprises an M-shape in a cross-section perpendicular to surfaces (211a, 211b, 213a, 213b) corresponding to the tooth flanks of the upper and lower jaw portions (210a, 210b) in the region of the upper and lower jaw portions (210a, 210b), respectively, wherein the inner flanks (211a, 211b, 212a, 212b, 213a, 213b) of the M-shape respectively form the upper and lower jaw portions (210a, 210b), and the lower ends of the outer flanks of the M-shape (220, 230) of the lower jaw portion (210b) are connected to corresponding lower ends of outer flanks (220, 230) of the M-shape of the upper jaw portion (210a).

14. Tooth cleaning device (100) according to claim 13, wherein
the cleaning structures comprise longitudinal lamellae extending in the upper and lower jaw portions (210a, 210b) respectively parallel to the extension direction of the interdental spaces of the user and perpendicular to the silicone shell wall of the upper and lower jaw portions (210a, 210b).

## Revendications

1. Dispositif de nettoyage dentaire (100) avec un dispositif d'entraînement intégré pour le nettoyage simultané mains-libres de plusieurs, de préférence toutes, les dents d'un utilisateur, comprenant :
une structure de support (30) comprenant :
un insert buccal (30a) pour la mâchoire supérieure de l'utilisateur et un insert buccal (30b) pour la mâchoire inférieure de l'utilisateur ; et
au moins un dispositif d'entraînement (10) pour la génération de vibrations,
dans lequel l'au moins un dispositif d'entraînement (10) est disposé au moins partiellement dans un espace entre l'insert buccal (30a) pour la mâchoire supérieure et l'insert buccal (30b) pour la mâchoire inférieure, et est relié à ceux-ci, pour transmettre les vibrations de l'au moins un dispositif d'entraînement (10) aux inserts buccaux (30a, 30b) ;
dans lequel le dispositif de nettoyage dentaire (100) est **caractérisé en ce qu'**il comprend en outre : une enveloppe en silicone (200) qui entoure sensiblement complètement la structure de support (30) et l'au moins un dispositif d'entraînement (10).

2. Dispositif de nettoyage dentaire (100) selon l'une des revendications précédentes, dans lequel l'au moins un dispositif d'entraînement (10) comprend :
un moteur à vibrations pour la génération de vibrations, et
un boîtier (14), dans lequel le moteur à vibrations est disposé au moins partiellement dans le boîtier (14) et est relié au boîtier pour transmettre les vibrations générées via le boîtier (14) aux inserts buccaux (30a, 30b).

3. Dispositif de nettoyage dentaire (100) selon la revendication 1, dans lequel l'enveloppe en silicone (200) est réalisée d'un seul tenant et comprend une ouverture et un couvercle en silicone qui ferme l'ouverture de manière étanche à l'eau et aux poussières selon la norme IP67.

4. Dispositif de nettoyage dentaire (100) selon l'une des revendications 1 à 3, dans lequel le moteur à vibrations génère des vibrations par rotation d'un balourd (12) et un axe de rotation du balourd (12) s'étend sensiblement parallèlement à un plan de dentition de l'utilisateur, lequel s'étend sensiblement parallèlement aux inserts buccaux (30a, 30b), et entre ceux-ci, à savoir que l'axe de rotation du balourd (12) est sensiblement parallèle à celui de l'axe sagittal du corps de l'utilisateur qui utilise le dispositif de nettoyage dentaire (100).

5. Dispositif de nettoyage dentaire (100) selon la revendication 4, dans lequel le balourd (12) est disposé en-dehors de l'espace entre les inserts buccaux (30a, 30b) et en-dehors du boîtier (14) de l'au moins un dispositif d'entraînement (10).

6. Dispositif de nettoyage dentaire (100) selon l'une des revendications précédentes, dans lequel les inserts buccaux (30a, 30b) touchent directement l'au moins un dispositif d'entraînement (10) ou sont respectivement directement reliés via un coussinet d'amortissement des vibrations à l'au moins un dispositif d'entraînement (10).

7. Dispositif de nettoyage dentaire (100) selon l'une des revendications précédentes, dans lequel l'au moins un dispositif d'entraînement (10) est configuré pour générer des vibrations de 50-400 Hz, de préférence de 70-350 Hz, et de manière particulièrement préférée, de 100-330 Hz.

8. Dispositif de nettoyage dentaire (100) selon l'une des revendications précédentes, dans lequel l'au moins un dispositif d'entraînement (10) est configuré pour générer des vibrations le long de l'axe longitudinal du corps de l'utilisateur qui utilise le dispositif de nettoyage dentaire (100).

9. Dispositif de nettoyage dentaire (100) selon l'une des revendications 1 à 8, comprenant en outre :
une pile (50) qui alimente en énergie l'au moins un dispositif d'entraînement (10), et une platine de commande (60) qui commande le fonctionnement du dispositif de nettoyage dentaire (100), dans lequel l'enveloppe en silicone (200) entoure sensiblement complètement la pile (50) et la platine de commande (60).

10. Dispositif de nettoyage dentaire (100) selon l'une des revendications précédentes, dans lequel au moins l'un des inserts buccaux (30a, 30b) de la structure de support (30) comprend une première partie d'insert buccal et une deuxième partie d'insert buccal qui sont reliées à une partie élastique pivotante (130a, 130b) qui présente, dans le plan de dentition qui s'étend sensiblement parallèlement aux inserts buccaux (30a, 30b), et entre ceux-ci, une rigidité plus faible que la première et la deuxième partie d'insert buccal pour faciliter une déformation de l'insert buccal respectif (30a, 30b) dans le plan de dentition.

11. Dispositif de nettoyage dentaire (100) selon l'une des revendications précédentes, dans lequel la structure de support comprend en outre :
une partie de liaison d'inserts buccaux qui relie entre eux les inserts buccaux (30a, 30b) de la structure de support, de préférence dans la zone des dents postérieures arrières de l'utilisateur.

12. Dispositif de nettoyage dentaire (100) selon l'une des revendications précédentes, dans lequel la structure de support comprend une armature de boîtier, dans lequel la structure de support et l'armature de boîtier sont réalisées d'une seule pièce et le dispositif d'entraînement s'ajuste dans l'armature de boîtier, dans lequel la structure de support et l'armature de boîtier sont de préférence fabriquées en PA 6, PA, 6.6, PA 4.6, PA 11, PA 12, PA 1010, PA 610, copolyamides ou mélanges de polyamides à partir de ceux-ci, et de manière particulièrement préférée en PA 6.6 ou copolyamides ou mélanges de polyamides avec celui-ci.

13. Dispositif de nettoyage dentaire (100) selon l'une des revendications 1-12, dans lequel l'enveloppe en silicone (200) comprend :
une partie de mâchoire supérieure (210a) ; et
une partie de mâchoire inférieure (210b), dans lequel la partie de mâchoire supérieure (210a) et la partie de mâchoire inférieure (210b) correspondent respectivement à une empreinte négative d'une mâchoire supérieure ou inférieure d'une dentition humaine et, respectivement pendant une utilisation du dispositif de nettoyage dentaire à vibrations, sont adaptées à des flancs de dents intérieurs et extérieurs et, dans la zone des dents postérieures, additionnellement à des surfaces de mastication de la mâchoire supérieure ou inférieure de l'utilisateur, dans lequel l'enveloppe de silicone (200) présente des structures de nettoyage sur la partie de mâchoire supérieure et inférieure (210a, 210b) qui sont adaptées pour entrer en contact avec les dents de la mâchoire supérieure ou inférieure au niveau des flancs de dent et des surfaces de mastication pendant le fonctionnement, et
dans lequel
l'enveloppe en silicone (200) comprend, dans une section transversale perpendiculairement aux surfaces (211a, 211b, 213a, 213b) correspondant aux flancs de dents de la partie de mâchoire supérieure et inférieure (210a, 210b), dans la zone de la partie de mâchoire supérieure et inférieure (210a, 210b), respectivement une forme en M, dans lequel les flancs intérieurs (211a, 211b, 212a, 212b, 213a, 213b) de la forme en M forment respectivement la partie de mâchoire supérieure et inférieure (210a, 210b), et les extrémités inférieures des flancs extérieurs de la forme en M (220, 230) de la partie de mâchoire inférieure (210b) sont reliées à des extrémités inférieures correspondantes de flancs extérieurs (220, 230) de la forme en M de la partie de mâchoire supérieure (210a).

14. Dispositif de nettoyage dentaire (100) selon la revendication 13,
dans lequel les structures de nettoyage comprennent des lamelles longitudinales qui s'étendent dans la partie de mâchoire supérieure et inférieure (210a, 210b) respectivement parallèlement à la direction d'extension des espaces interdentaires de l'utilisateur et perpendiculairement à la paroi d'enveloppe en silicone de la partie de mâchoire supérieure et inférieure (210a, 210b).
